# EUROPEAN PATENT APPLICATION

(11) **EP 2 557 149 A1**
(43) Date of publication of application: **13.02.2013**
(21) Application number: 12179543.9
(22) Date of filing: 07.08.2012
(51) Int. Cl.: C12C 7/24, B01D 21/26

(54) **Whirlpool separating device**

(30) Priority: 12.08.2011 IT TV20110117
(71) Applicant: Velo S.p.A., 31030 Altivole, Frazione Caselle (IT)
(72) Inventor: Velo, Antonio, 31030 Altivole (TV) (IT); Poloniato, Elio, 31030 Altivole (TV) (IT)
(74) Representative: Citron, Massimiliano

(57) **Abstract**

To overcome complexity problems and long process duration, the inventive concept envisages that a separating vortex device has, besides a tank wherein the must takes whirling motion in order to separate the solid parts from the liquid by centrifugal effect, an evaporation surface for the liquid to allow the formation on it of an evaporating liquid film.

## Description

The invention relates to a separating vortex device for turbid beer must.

To produce beer, malt is boiled in water, a process during which the starch dissolves in water and proteins clump creating flocs. One now has the so-called beer-must, a turbid liquid which must be cleaned from suspended solids and then cooled down and made to ferment.

The must clarification usually takes place as described in EP 1 253 194, i.e. by means of a separating vortex tank ("whirlpool"). After boiling, the must is transferred into a tank (5) so as to form therein a whirling motion, and by centrifugal effect to gather the flocs in the center. After a certain waiting for the sedimentation, the clear must is sent in a heat exchanger (8).

The disadvantages of this system are mainly two. First, one has to wait time before evaporating the must needed for the sedimentation of flocs. This dead time affects the hourly efficiency of the plant and the production costs, especially energy (in the meantime the plant is constantly powered). Second, the system is complex, because formed by the series of many cascaded stages, and poorly adaptable to production of small size.

The object of the invention is to obviate one or more of these problems, with a device and/or method according to appended claims, wherein the dependent ones define advantageous variants.

The inventive concept provides that the separating device has, in addition to a tank or chamber in which the must takes whirling motion in order to separate by centrifugal effect the solid parts from the liquid, an evaporation surface for the liquid adapted to allow the formation on it of a film of evaporating liquid. The evaporation surface is integrated in, or constitutes a part of, the device, e.g. in a single piece.

The integration into the device of the evaporation surface allows:
- the reduction of the costs of containers, since two devices are combined into one;
- (therefore) the ability to produce small volumes;
- the reduction of power (and thus costs, consumption and dimensions) of the pumps;
- large energy savings in the evaporation phase, because the liquid must not travel long pipes lowering its temperature;
- reduced processing time, because the cycle does not envisage the passage on two separate machines;
- reduction of the space occupied by the plant.

The evaporation surface may be integrated in many ways, of which the favorites following ones, alone or in combination, allow construction simplicity and compactness:
- the tank forms a centrifugation chamber for the must, and the chamber has an outlet or opening for the liquid toward a separated evaporation surface, which can be formed by a (e.g. lateral) wall of the centrifugation chamber. Such wall can be external, if the liquid is made to overflow radially from a center toward the outside, or internal, if the liquid is made to overflow radially from the periphery toward a center;
- the evaporation surface is comprised in a second chamber or volume or tank which is superimposed to, or underlying, the centrifugation chamber. The liquid moves from the first to the second chamber, advantageously by gravity (fall) or by pressure (e.g. by centrifugal thrust), traveling a short distance to then evaporate;
- said outlet is in the top part, in use, of the centrifugation chamber, to obtain a (natural and zero-costing) overflow of the liquid from the centrifugation chamber to the evaporation surface;
- a housing may enclose the centrifugation chamber so that the liquid can fall by gravity in the interspace between the two.

The device can work in continuous mode, without interruptions for process wait.

The inventive idea relates also to a method as in claim 10. The liquid is made to overflow from a centrifugation chamber to an evaporation surface to allow the formation of a liquid film on it to promote or obtain evaporation. The exploitation of gravity to move the liquid allows the saving of pumps and minimizes the overall dimensions.

For "overflow" we mean the passage of liquid from a volume or chamber to another adjacent one due to increased level. The liquid exceeds the top of the walls or banks or edges of the chamber containing it and passes over.

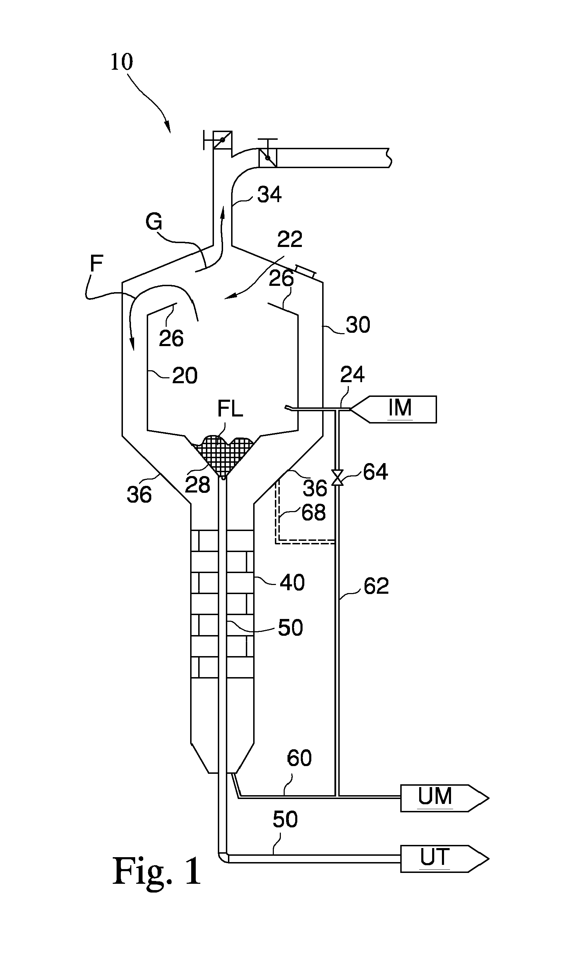

The advantages of the invention will be more apparent from the following description of a preferred embodiment of the device, making reference to the annexed drawing in which
- Figure 1 shows a cross-sectional diagram of the device;
- Figures 2, 3, 4 show cross-sectional diagrams for variations of the device.

A vortex generator device is generally indicated by 10. It comprises a chamber or tank 20 which has a funnel-shaped bottom 28 and a top opening 22 bounded and defined by sloping walls 26. In the chamber 20 a duct 24 opens which serves to inject the turbid must from a must input IM.

The chamber 20 is enclosed by an outer casing or second tank 30. The relative dimensions of the casing 30 and the chamber 20 are such as to form an interspace or empty space 32 between the walls of the chamber 20 and those of the casing 30.

The casing 30 comprises at the top an output 34 for steam and at the bottom (e.g. on the bottom end or on one side) an output 36 for liquid.

The output 36 is connected with a distillation column or stripper 40, which passes coaxially a conduit 50 which lets the bottom 28 communicate with an output UT for sedimented flocs. The base of column 40 communicates with a duct 60 for the evacuation of the clear must through a must output port UM. A duct 62 fitted with a flow regulator 64 (e. g. a valve) allows to return some clear must in the conduit 24 for recirculating it in the tank 20.

The device 10 operates as follows.

The turbid must flows from the must input IM (e.g. connected to the output of a boiler) and via the conduit 24 arrives tangentially into the chamber 20 where it begins to swirl. By centrifugal effect, some flocs FL in suspension in the must agglomerate at the center of the chamber 20 and low, settling on the bottom 28.

At some point the liquid level in the chamber 20, given the continuous feeding, is such as to reach the opening 22 and overflow. The liquid that overflows is clean and filtered by flocs. It then flows and falls on the side of the walls 26 (see path F) external to the chamber 20. On the walls 26 the liquid forms a thin film that allows the fast evaporation of unpleasant compounds, like e.g. DMS. The evaporated products and the vapor are collected (see path G) at the exit 34, also thanks to the creation of vacuum inside the tank 30 (by known means).

From the walls 26 the liquid falls then in the interspace 32, crosses it and reaches the exit 36, then crossing the column 40 for a further phase of evaporation. The clear must is then collected from the conduit 60 and sent to a fermentation or cooling stage.

When the device 10 starts the clarified liquid can be recirculated, via the duct 62, into the chamber 20, to wait for an adequate degree of purity at exit UM. Note that at full speed the device 10 works continuously, i.e. without stops to wait for the sedimentation of flocs FL to occur. The liquid that overflows on the walls 26 is clean and filtered by flocs, which by gravity and centrifugal force remain at the lower part of the chamber 20. To avoid discharge dead times for the deposited flocs FL, it is preferred that an automatic and/or programmable system (e.g. a PLC which controls pumps or ejectors means, and/or the use of a turbidimeter) be present in charge of periodic and/or controlled evacuation of the sedimented mass FL through the conduit 50. For this purpose the device 10 can also be equipped with a sight-glass to observe the level of deposited mass FL for a discharge with manual control.

The column 40 is optional, and it is advantageous in plants of large capacity, where the area of the walls 26 can be too small to ensure adequate evaporation. In this case the duct 60 would be absent and an equivalent conduit can run e.g. (see conduct 68 in dashed lines) from the exit 36 or in general from a point of the interspace 32.

The device according to the invention is open to many variants. E.g. the centrifugation chamber may have a toroidal shape and the chamber or interspace for collecting liquid can be located inside it (reverse positions with respect to device 10).

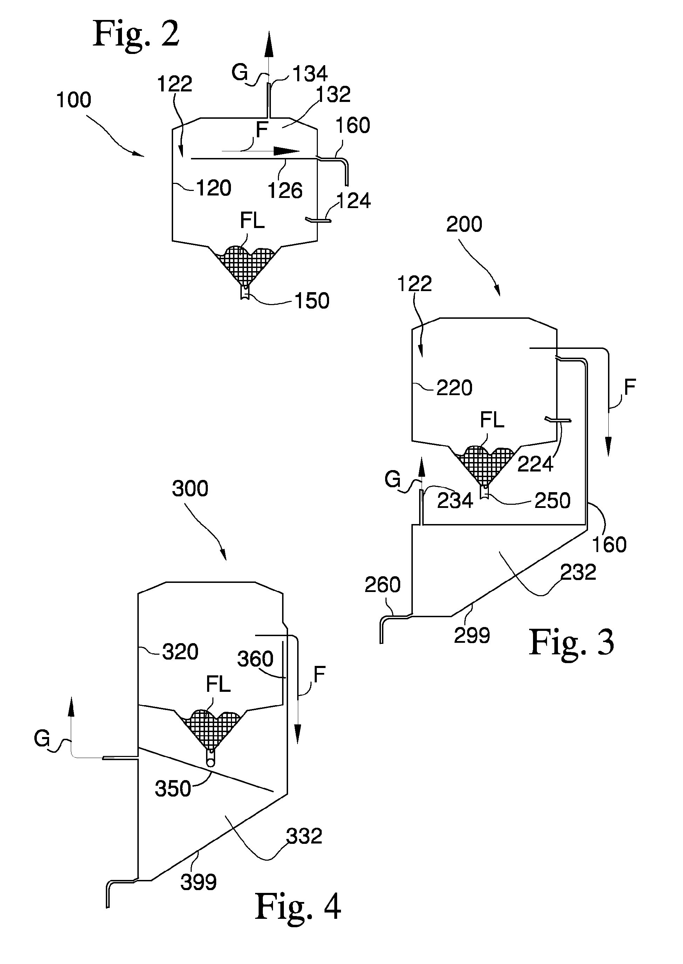

Another variant 100 is shown in Fig 2.

The reference numerals in Fig 2, 3 and 4, increased by hundreds with respect to those already defined, or the same letters, indicate a same or functionally equal thing.

The device 100 comprises a centrifugation chamber 120 and an evaporation chamber 132 superimposed to it. Chambers 120, 132 communicate via an opening 122 obtained in a dividing wall 126, above which the liquid must without flocs FL is pushed by pressure and there spreads in the form of a film letting unwanted components evaporate. The liquid is then collected by a drainage conduit 160.

Fig 3 shows another variant 200, where with respect to Figure 2 the chambers 120 and 132 are in inverted positions (see ref. 220, 232) and the liquid arrives in the chamber 232 by gravity and therein can evaporate on an inclined plane 299.

Fig 4 shows another variant 300, which differs from the previous one for the fact that the chambers 320, 332 are separate volumes within a same container. E.g. the bottom of the chamber 320 might be the ceiling of the chamber 332, or there may be other dividing walls 350. The liquid (arrow F) arrives in the chamber 332 by gravity via a duct 360 obtained as distance between peripheral walls, and there il can evaporate on an inclined plane 399.

## Claims

1. Separating vortex device (10, 100, 200, 300) for cloudy must of beer made up of solid parts suspended in a liquid, comprising
- a tank (20, 120, 220, 320) wherein the must takes whirling motion in order to separate the solid parts from the liquid by centrifugal effect;
**characterized in that** it comprises an evaporation surface (26, 126: 299, 399) for the liquid to allow the formation on it of an evaporating liquid film.

2. Device according to claim 1, wherein the tank forms a centrifugation chamber (20) for the whirling motion of the must, the chamber having an outlet (22) for the liquid toward the evaporation surface.

3. Device according to claim 2, wherein the evaporation surface is formed by a wall (26) of the centrifugation chamber.

4. Device according to claim 3, wherein said wall comprises a side outer wall of the centrifugation chamber.

5. Device according to claim 2, wherein the evaporation surface is comprised in a second chamber (132, 232, 332) superimposed to or underlying the centrifugation chamber.

6. Device according to claim 2 or 3 or 4 or 5, wherein the outlet is in the top part, in use, of the centrifugation chamber.

7. Device according to one of claims 2 to 6, comprising a housing (30) that encloses the centrifugation chamber forming an interspace between the two for the passage of the liquid.

8. Device according to claim 7, wherein the interspace comprises or leads to one or more evaporation surfaces (40, 299, 399) for the liquid.

9. Device according to one of the preceding claims, comprising a fluid circuit comprising
- a liquid outlet (60) from the evaporation surface,
- an inlet (24) of cloudy must in the tank, and
- a dosing member (64) for varying an amount of liquid coming from the evaporation surface to be re-entered the inlet of cloudy must.

10. Method for purifying a cloudy must of beer formed by solid parts suspended in a liquid, comprising the phases of
- imparting whirling motion to the must inside a chamber (20) in order to separate the solid parts from the liquid by centrifugal effect, **characterized by**
- letting the liquid overflow from the chamber to an evaporation surface (26) to allow the formation of a liquid film on it to promote or obtain evaporation.
